# EUROPÄISCHE PATENTSCHRIFT

(11) **EP 3 704 391 B1**
(45) Veröffentlichungstag und Bekanntmachung des Hinweises auf die Patenterteilung: **14.07.2021**
(21) Anmeldenummer: 18821987.7
(22) Anmeldetag: 29.10.2018
(51) Int. Cl.: F16C 33/38, F16C 33/46, B29C 45/26

(54) **WÄLZLAGERKÄFIG, VERFAHREN ZUR HERSTELLUNG EINES WÄLZLAGERKÄFIGS UND VERWENDUNG EINES SCHIEBERS**
ANTI-FRICTION BEARING CAGE, METHOD FOR PRODUCING AN ANTI-FRICTION BEARING CAGE, AND USE OF A SLIDE
CAGE DE PALIER À ROULEMENT, PROCÉDÉ DE FABRICATION D'UNE CAGE DE PALIER À ROULEMENT ET UTILISATION D'UN COULISSEAU

(30) Priorität: 03.11.2017 DE 102017125700
(43) Veröffentlichungstag der Anmeldung: 09.09.2020
(73) Patentinhaber: Schaeffler Technologies AG & Co. KG, 91074 Herzogenaurach (DE)
(72) Erfinder: DRESSEL, Robert, 91350 Gremsdorf (DE); WINKLER, Manuel, 96178 Pommersfelden (DE); ZWOSTA, Harald, 96193 Wachenroth (DE); KACER, Claudia, 90439 Nürnberg (DE); ARNET, Horst, 91207 Lauf a.d. Pegnitz (DE)
(86) Internationale Anmeldenummer: PCT/DE2018/100882
(87) Internationale Veröffentlichungsnummer: WO 2019/086076

(56) Entgegenhaltungen:
- DE-A1- 2 711 882
- DE-B- 1 267 912
- US-A- 3 350 149

## Beschreibung

Die Erfindung betrifft einen Wälzlagerkäfig, ein Verfahren zur Herstellung eines Wälzlagerkäfigs und eine Verwendung eines Schiebers, mit deren Hilfe Wälzkörper eines Wälzlagers in einer definierten Relativlage zueinander in dem Wälzlager positioniert werden können.

Es ist bekannt, einen Wälzlagerkäfig für ein Wälzlager aus Kunststoff herzustellen, indem für jede zur Aufnahme eines Wälzkörpers vorgesehene Aufnahmetasche ein oder mehrere Schieber vorgesehen sind, der beim Entformen des Wälzlagerkäfigs in radialer Richtung verschoben werden kann, wie in der US 3 350 149 A gezeigt. Die durch den jeweiligen Schieber ausgebildeten Aufnahmetaschen sind dadurch radial zu einem Mittelpunkt des Wälzlagerkäfigs ausgerichtet.

Die DE 27 11 882 A1 beschreibt eine Kugelbüchse mit einem Käfig gemäß dem Oberbegriff des Anspruchs 1, der mehrere am Umfang verteilte Führungsbahnen zur Aufnahme von Kugelreihen aufweist. Die Herstellung des Käfigs erfolgt im Spritzgussverfahren, wobei ein seitensymmetrischer Radialschieber zum Einformen von zwei Führungsbahnen eingesetzt wird.

Es besteht ein ständiges Bedürfnis, einen Wälzlagerkäfig für ein Wälzlager kostengünstig herzustellen und seine Schmierstoffspeicherfähigkeit zu verbessern.

Es ist die Aufgabe der Erfindung Maßnahmen aufzuzeigen, die eine Herstellung eines solchen Wälzlagerkäfigs ermöglichen.

Die Lösung der Aufgabe erfolgt erfindungsgemäß durch einen Wälzlagerkäfig mit den Merkmalen des Anspruchs 1, ein Verfahren mit den Merkmalen des Anspruchs 7 sowie eine Verwendung mit den Merkmalen des Anspruchs 9. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Wälzlagerkäfig für ein Wälzlager vorgesehen mit mindestens einem in Umfangsrichtung geschlossen verlaufenden Käfigring und mehrere von dem Käfigring in axialer Richtung abstehende Käfigstege, wobei der mindestens eine Käfigring und jeweils zwei Käfigstege eine Aufnahmetasche zur Aufnahme eines Wälzkörpers begrenzen, wobei in Umfangsrichtung nachfolgende Käfigstege eine unterschiedliche Querschnittsgeometrie zur Ausbildung von mindestens zwei in Umfangsrichtung nachfolgende Aufnahmetaschen mit parallelen Entformungsrichtungen für einen gemeinsamen Schieber aufweisen. Dabei weisen die, eine Aufnahmetasche begrenzenden Käfigstege aufeinander zuweisende Seitenflanken auf, wobei jedes Paar von in tangentialer Richtung aufeinander zu weisenden Seitenflanken zumindest in einem Teilbereich in Entformungsrichtung verlaufende, zueinander parallele Teilflächen aufweisen, wobei eine erste Teilfläche angrenzend an einen Innenradius des Wälzlagerkäfigs angeordnet ist, wobei mindestens eine zweite Teilfläche von dem Innenradius des Wälzlagerkäfigs beabstandet angeordnet ist, und wobei die erste Teilfläche lediglich an einer der aufeinander zuweisenden Seitenflanken angeordnet ist, während die mindestens eine zweite Teilfläche zumindest an der anderen der aufeinander zuweisenden Seitenflanken angeordnet ist.
Durch die Art der Anordnung der ersten Teilflächen wird zwischen einem in der Aufnahmetasche angeordneten Wälzkörper und dem Wälzlagerkäfig ein Aufnahmeraum für Schmiermittel bereitgestellt, der die Schmierung eines Wälzlagers stark verbessert. Dieser Aufnahmeraum wird hier gleichzeitig mit den Aufnahmetaschen kostengünstig ausgebildet.

Anstatt zwei in Umfangsrichtung nachfolgende Aufnahmetaschen in exakt radialer Richtung zu einem Mittelpunkt des Wälzlagerkäfigs und des Käfigrings auszurichten, können die Aufnahmetaschen zueinander im Wesentlichen parallel ausgerichtet sein. Hierzu kann die eine Aufnahmetasche derart ausgerichtet sein, dass eine gedachte Mittellinie an dem Mittelpunkt des Wälzlagerkäfigs als Sekante zu einer Seite hin etwas versetzt verläuft, während die andere Aufnahmetasche derart ausgerichtet sein kein, dass eine gedachte Mittellinie an dem Mittelpunkt des Wälzlagerkäfigs als Sekante zu einer entgegengesetzten Seite hin etwas versetzt verläuft. Durch diese, zur reinen Radialrichtung derart etwas angeschrägte Ausrichtung der benachbarten Aufnahmetaschen, indem also die Aufnahmetaschen in eine gemeinsame zueinander parallele Richtung ausgerichtet sind, ist es möglich, diese Aufnahmetaschen mit Hilfe eines gemeinsamen Schiebers oder vergleichbaren Werkzeugs gleichzeitig auszuformen und zu entformen. Die Anzahl der Schieber, um die gewünschte Anzahl an Aufnahmetaschen bei der Herstellung des Wälzlagerkäfigs ausbilden zu können, kann dadurch reduziert werden. Dies wiederum reduziert die Anzahl der Betätigungsaktoriken, um die Schieber in radialer Richtung verlagern zu können. Der Wälzlagerkäfig kann dadurch mit einem kostengünstiger herzustellenden Werkzeug hergestellt werden, so dass die Herstellungskosten reduziert werden können. Insbesondere bei der Herstellung von Speziallagern, die in geringeren Stückzahlen hergestellt werden als in Massenproduktion herstellbare genormte Standardlager, können die Stückkosten reduziert werden. Die Herstellung von individuell hergestellten Spezialmaschinen mit gelagerten drehenden Bauteilen mit eher unüblichen Abmaßen und/oder Anforderungsprofilen kann dadurch kostengünstiger erfolgen. Durch die gleiche Ausrichtung einer Anzahl benachbarter Aufnahmetaschen kann die Anzahl der zur Herstellung der Aufnahmetaschen erforderlichen Schieber reduziert werden, so dass eine kostengünstige Herstellung eines Wälzlagerkäfigs ermöglicht ist.

Der Käfigring kann in radialer Richtung zwischen einem Innenring und einem Außenring eines Wälzlagers, insbesondere Radiallagers, angeordnet sein. In den durch die Käfigstege in Umfangsrichtung voneinander abgegrenzten Aufnahmetaschen ist jeweils ein, insbesondere als Kugel, Zylinder, Rolle, Tonne, Kegel oder Nadel ausgestalteter, Wälzkörper angeordnet, der an dem Innenring und/oder an dem Außenring abwälzen kann. Die in den zugeordneten Aufnahmetaschen angeordneten jeweiligen Wälzlager können dadurch auf einem definierten Abstand zueinander in Umfangsrichtung auf einem gemeinsamen Teilkreisradius angeordnet sein. Insbesondere weisen jeweils genau zwei in Umfangsrichtung nachfolgende Aufnahmetaschen eine gemeinsame Entformungsrichtung auf. Dadurch können leicht mehrere Zweier-Paare von Aufnahmetaschen mit jeweils einer gemeinsamen Entformungsrichtung in Umfangsrichtung hintereinander vorgesehen sein. Die Anzahl der erforderlichen Schieber zur Ausbildung der Aufnahmetaschen während eines Urformverfahrens, insbesondere Kunststoffspritzguss, kann dadurch halbiert werden. Es ist aber auch möglich drei oder mehr Aufnahmetaschen mit jeweils einer gemeinsamen Entformungsrichtung vorzusehen, so dass ein gemeinsamer Schieber entsprechend viele Aufnahmetaschen herstellen kann. Insbesondere bei einer großen Anzahl von Aufnahmetaschen können entsprechend mehr Aufnahmetaschen von jeweils einem Schieber hergestellt werden. Die Entformungsrichtung entspricht der linearen Bewegungsrichtung des Schiebers, wenn der Schieber nach der Ausbildung der Aufnahmetaschen aus der Mehrzahl der Aufnahmetaschen, für die der Schieber vorgesehen war, herausgezogen wird. Insbesondere wird der Schieber, beziehungsweise ein Schwerpunkt oder eine Mittellinie des Schiebers, im Wesentlichen in radialer Richtung bewegt, wobei die radiale Bewegung des Schiebers entlang einer durch den Mittelpunkt des Käfigrings verlaufende Bewegungsrichtung beim Entformen für die in Umfangsrichtung zu dem Schwerpunkt oder der Mittellinie des Schiebers versetzte zugehörige Aufnahmetasche eine zur Radialrichtung angeschrägte Entformungsrichtung entspricht, die um einen definierten Abstand in tangentialer Richtung versetzt im Wesentlichen parallel zur Bewegungsrichtung des Schiebers beim Entformen verläuft. Ein Flächenschwerpunkt einer in axialer Richtung betrachteten Querschnittsfläche zumindest einer Aufnahmetasche wird beim Entformen von dem Schieber in einer Entformungsrichtung überstrichen, die an dem Mittelpunkt des Käfigrings vorbei weist.

Insbesondere sind in tangentialer Richtung aufeinander zu weisende Seitenflanken von in Umfangsrichtung nachfolgenden Käfigstegen zur Positionierung eines Mittelpunkts eines Wälzkörpers in der jeweiligen Aufnahmetasche auf einen gemeinsamen vordefinierten Wälzradius ausgeformt. Hierbei kann berücksichtigt werden, dass die dem Verlauf einer Sekante entsprechende Anschrägung der Ausrichtung der Aufnahmetasche bei einer ebenen geraden Flankengestaltung entlang der Entformungsrichtung zu einem radialen Versatz der in den jeweiligen Aufnahmetaschen aufgenommenen Wälzkörpern führen kann. Die dreidimensionale Formgestaltung der Seitenflanken ist jedoch derart gewählt, dass die Rotationsachsen der Wälzkörper im eingebauten Zustand auf einem gemeinsamen Teilkreis liegen. Insbesondere können die Seitenflanken in einer Teilfläche hierzu beispielsweise gerundete Anlagefläche ausbilden, die flächig an dem Wälzkörper anliegen und dadurch eine bestimmte Positionierung des Wälzkörpers auf einem definierten Radius erzwingen können.

Vorzugsweise weisen in tangentialer Richtung aufeinander zu weisende Seitenflanken von in Umfangsrichtung nachfolgenden Käfigstegen jeweils eine Anlagefläche zum Anliegen an dem Wälzkörper auf, wobei die Anlageflächen verschiedener Käfigstege der selben Aufnahmetasche auf einem unterschiedlichen Radius positioniert sind.

Durch die zur Radialrichtung angeschrägte Entformungsrichtung der Aufnahmetasche kann eine symmetrische beziehungsweise spiegelbildliche Formgestaltung der aufeinander zu weisende Seitenflanken der Käfigstege einer Aufnahmetasche nicht notwendigerweise garantiert werden. Durch die bewusst asymmetrische und nicht spiegelbildliche Ausgestaltung der Seitenflanken kann an für den Schieber leicht erreichbaren Flächenbereichen der jeweiligen Seitenflanken eine, insbesondere gerundete und/oder an die Außenkontur des Wälzkörpers angepasste, Anlagefläche ausgebildet werden. In diesem Fall sind die Anlageflächen in radialer Richtung zueinander versetzt angeordnet, damit die Rotationsachse des Wälzkörpers leicht auf einem definierten Wälzradius positioniert werden kann. Dadurch können die in den Aufnahmetaschen eingesetzten Wälzkörper leicht entlang eines gemeinsamen Teilkreises angeordnet werden.

Erfindungsgemäß weisen die Seitenflanken mindestens eines Paars von in tangentialer Richtung aufeinander zu weisenden Seitenflanken von in Umfangsrichtung nachfolgenden Käfigstegen zumindest in einem Teilbereich in Entformungsrichtung verlaufende im wesentlichen parallele Flächen auf. Die Flächennormalen der jeweiligen parallelen Flächen können im Wesentlichen senkrecht zur Entformungsrichtung stehen. Die parallelen Flächen können um eine Entformungsschräge von beispielsweise 1-5° angeschrägt zur Entformungsrichtung verlaufen. Abgesehen von einer gegebenenfalls vorgesehenen Entformungsschräge können die Seitenflanken, insbesondere außerhalb von Anlageflächen, im Wesentlichen der Entformungsrichtung folgen. Ein unnötiger Materialeintrag, der für die Führung der Wälzlager nicht benötigt wird, kann dadurch eingespart werden.

Insbesondere weist mindestens ein Käfigsteg in tangentialer Richtung voneinander weg weisende Seitenflanken mit jeweils zumindest in einem Teilbereich in Entformungsrichtung verlaufende zueinander im wesentlichen parallelen Flächen auf. Insbesondere der Käfigsteg, der zwischen zwei von einem gemeinsamen Schieber ausgebildeten Aufnahmetaschen ausgeformt wird, kann zueinander im Wesentlichen parallele in Entformungsrichtung verlaufende Teilflächen, insbesondere zweite Teilflächen, aufweisen. Gegebenenfalls können die im Wesentlichen parallel zueinander verlaufenden Teilflächen um eine Entformungsschräge von beispielsweise 1-5° angeschrägt zur Entformungsrichtung verlaufen. Der Käfigsteg kann dadurch eine definierte Mindestdicke aufweisen, so dass ein stark kegeliger Querschnitt mit einer dünnen Wandstärke radial innen und einer dicken Wandstärke radial außen zumindest reduziert werden kann. Das Einsetzen und Positionieren eines Wälzkörpers innerhalb der Aufnahmetasche kann dadurch verbessert werden.

Insbesondere die beiden Käfigstege, die seitlich von zwei Aufnahmetaschen, die von einem gemeinsamen Schieber gebildet werden, angeordnet sind, können zueinander parallele in Entformungsrichtung verlaufende Teilflächen, insbesondere erste Teilflächen, aufweisen.

Vorzugsweise weist mindestens ein Käfigsteg radial außen einen in tangentialer Richtung und/oder in Umfangsrichtung abstehenden Ansatz, insbesondere zum teilweisen radialen Abdecken eines Wälzkörpers, auf. Der Ansatz kann beispielsweise nasenförmig abstehen und für den Wälzkörper eine Anlagefläche ausbilden, die zumindest teilweise radial außerhalb zu seinem Schwerpunkt vorgesehen sein kann. Eine ungewollte Verlagerung des Wälzkörpers auf einen größeren Wälzradius kann dadurch vermieden werden.

Besonders bevorzugt ist eine von dem Ansatz begrenzte, in tangentialen Richtung hinterschnittene Vertiefung in einer zur Radialrichtung dieses Käfigstegs angeschrägten Entformungsrichtung im Wesentlichen vollständig frei zugänglich. Da die Entformungsrichtung an der, die Vertiefung ausbildenden Seitenflanke zur Radialrichtung angeschrägt verläuft, kann der Schieber bezogen auf die Vertiefung der Seitenflanke mit einem Bewegungsanteil in tangentialer Richtung von der Seitenflanke beim Entformen weggezogen werden. Dadurch kann die in radialer Richtung betrachtete, unter dem Ansatz hinterschnittene Vertiefung von dem Schieber tatsächlich ohne Überwindung eines den Hinterschnitt abdeckenden Absatzes erreicht und beim Entformen verlassen werden.

Die Erfindung betrifft ferner ein Verfahren zur Herstellung eines erfindungsgemäßen Wälzlagerkäfigs, der wie vorstehend beschrieben aus- und weitergebildet ist, insbesondere durch Kunststoffspritzguss, bei dem mindestens ein mindestens zwei Fortsätze aufweisender Schieber in einer Gießform bereitgestellt wird, ein Kunststoffmaterial in die Gießform eingefüllt wird, wobei zumindest ein Teil der Fortsätze des Schiebers zur Ausbildung von Käfigstegen von dem Kunststoffmaterial umgeben wird, und der Schieber im Wesentlichen nach radial außen relativ zur Gießform verschoben wird, um mindestens zwei Aufnahmetaschen in dem Wälzlagerkäfig gleichzeitig zu entformen. Durch die gleiche Ausrichtung einer Anzahl benachbarter Aufnahmetaschen kann die Anzahl der zur Herstellung der Aufnahmetaschen erforderlichen Schieber reduziert werden, so dass eine kostengünstige Herstellung eines Wälzlagerkäfigs ermöglicht ist. Der jeweilige Fortsatz des Schiebers kann eine Negativform für die jeweilige Aufnahmetasche ausbilden.

Insbesondere bildet der Schieber zwischen zwei benachbarten Fortsätzen eine Negativform eines Käfigstegs aus. Dadurch kann der Schieber auch die radiale Erstreckung des zwischen den von dem gemeinsamen Schieber ausgebildeten Aufnahmetaschen vorgesehenen Käfigstegs vorgeben. Ein zwischen die Fortsätze eingesetztes Bauteil der Gießform zur Formgebung des Käfigstegs kann dadurch vermieden werden, so dass sich ein einfacher Aufbau für die Gießform ergibt.

Die Erfindung betrifft ferner eine Verwendung eines mindestens zwei Fortsätze aufweisenden Schiebers zur Ausbildung und Entformung von mindestens zwei Aufnahmetaschen in einem Wälzlagerkäfig, der wie vorstehend beschrieben aus- und weitergebildet sein kann, während eines Urformverfahrens, insbesondere Kunststoffspritzguss. Durch die gleiche Ausrichtung einer Anzahl benachbarter Aufnahmetaschen kann die Anzahl der zur Herstellung der Aufnahmetaschen erforderlichen Schieber reduziert werden, so dass eine kostengünstige Herstellung eines Wälzlagerkäfigs ermöglicht ist. Der Schieber kann insbesondere in dem vorstehend beschriebenen Verfahren eingesetzt werden. Vorzugsweise ist eine Gießform vorgesehen, in dem der Schieber insbesondere in radialer Richtung relativ beweglich geführt ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht eines Teils eines Wälzlagerkäfigs während der Herstellung,
Fig. 2: eine schematische perspektivische Ansicht des Wälzlagerkäfigs aus Fig. 1 und
Fig. 3: eine schematische Detailansicht des Wälzlagerkäfigs aus Fig. 1.

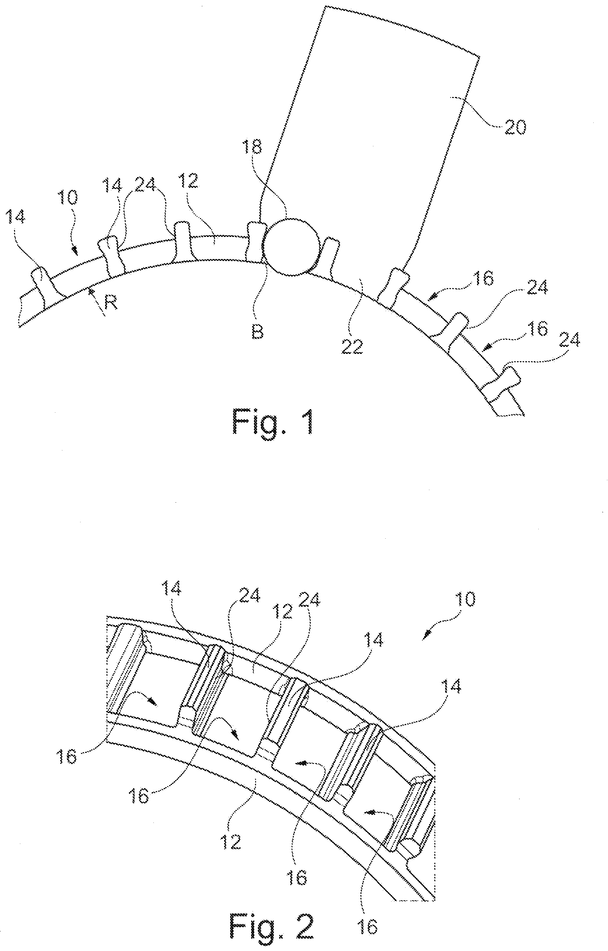

Der in Fig. 1 und Fig. 2 dargestellte Wälzlagerkäfig 10 weist zwei in Umfangsrichtung umlaufende, in axialer Richtung zueinander beabstandete und hintereinander angeordnete Käfigringe 12 auf, zwischen denen mehrere Käfigstege 14 in Umfangsrichtung hintereinander angeordnet sind. Die Käfigringe 12 und jeweils zwei in Umfangsrichtung nachfolgende Käfigstege 14 begrenzen eine Aufnahmetasche 16, in der jeweils ein Wälzkörper 18 eingesetzt werden kann. Die Käfigstege 14, die eine Aufnahmetasche 16 begrenzen, weisen zueinander zeigende Seitenflanken 24 auf. Der Wälzlagerkäfig 10 weist einen Innenradius R auf. Der Wälzlagerkäfig 10 kann durch Kunststoffspritzguss hergestellt werden, wobei im dargestellten Ausführungsbeispiel jeweils zwei in Umfangsrichtung nachfolgende Aufnahmetaschen 16 durch einen in radialer Richtung verschiebbaren gemeinsamen Schieber 20 erzeugt werden. Der Schieber 20 weist hierzu zwei in Umfangsrichtung des Wälzlagerkäfig 10 nachfolgende Fortsätze 22 auf, welche eine Negativform für die jeweilige Aufnahmetasche 16 ausbilden. Zudem ist zwischen den Fortsätzen 22 eine Negativform für denjenigen Käfigsteg 14 ausgebildet, der zwischen den von den Fortsätzen 22 des gemeinsamen Schiebers 20 ausgebildeten Aufnahmetaschen 16 liegt.

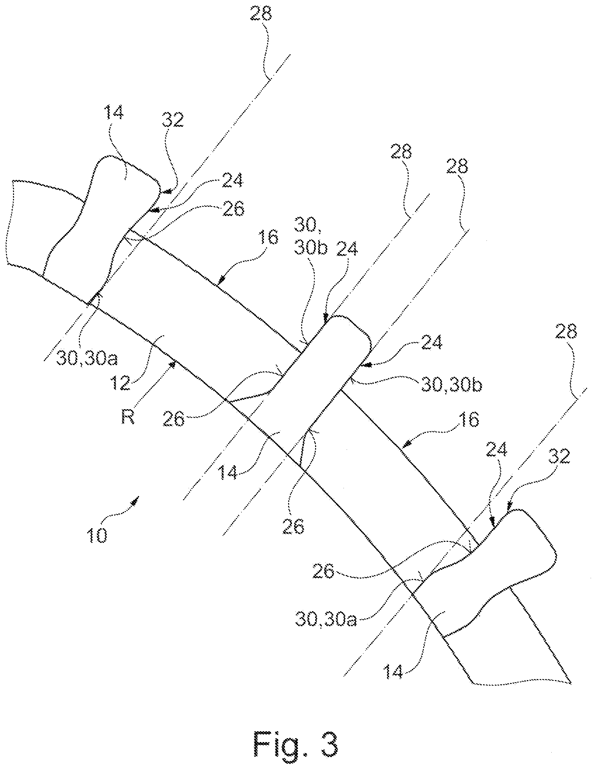

Wie insbesondere in Fig. 3 dargestellt, sind die in Umfangsrichtung nachfolgenden Käfigstege 14 jeweils unterschiedlich, insbesondere alternierend, ausgeformt. Die Käfigstege 14 weisen die Seitenflanken 24 auf, die im dargestellten Ausführungsbeispiel eine gerundete Anlagefläche 26 zur flächigen Anlage an dem Wälzkörper 18 und entlang einer Entformungsrichtung 28 verlaufende Teilflächen 30 aufweisen, wobei die von dem selben Schieber 20 ausgeformten Teilflächen 30 im Wesentlichen parallel zueinander und zu der Entformungsrichtung 28 des Schiebers 20 verlaufen. Dabei können die Teilflächen 30 gegebenenfalls um eine Entformungsschräge geringfügig angeschrägt zur Entformungsrichtung 28 verlaufen. Durch die zur Radialrichtung vergleichsweise starke Anschrägung der Entformungsrichtung 28 der jeweiligen Aufnahmetasche 16 ist es sogar möglich, an einer Seitenflanke 24 der Aufnahmetasche 16 die Anlagefläche 26 als in radialer Richtung betrachtete, durch einen nasenförmigen Ansatz 32 hinterschnittene Vertiefung auszubilden, wobei die Vertiefung für den zugehörige Fortsatz 22 des Schiebers 20 tatsächlich nicht hinterschnitten angeordnet ist.

Zudem sind die Anlageflächen 26 unterschiedlicher Käfigstege 14 einer betrachteten Aufnahmetasche 16 in radialer Richtung zueinander versetzt positioniert, um die Rotationsachse des Wälzkörpers 18 auf einem definierten Radius halten zu können.

Der Käfigsteg 14, der bei der gleichzeitigen Ausformung der beiden Aufnahmetaschen 16 beidseitig von Fortsätzen 22 des einen Schiebers 20 begrenzt ist, weist hier beidseitig zweite Teilflächen 30b auf, die beabstandet vom Innenradius R des Wälzlagerkäfigs 10 angeordnet sind. Die beiden Käfigstege 14, die seitlich an die Aufnahmetaschen 16 angrenzen, weisen auf ihren zur jeweiligen Aufnahmetasche 16 zeigenden Seitenflanke 24 jeweils eine erste Teilfläche 30a auf, die unmittelbar an den Innenradius R des Wälzlagerkäfigs 10 angrenzt. Dadurch bildet sich zwischen dem Wälzkörper 18 und der ersten Teilfläche 30a ein Aufnahmeraum B für Schmiermittel auf (vergleiche Figur 1).

### Bezugszeichenliste

- 10: Wälzlagerkäfig
- 12: Käfigring
- 14: Käfigsteg
- 16: Aufnahmetasche
- 18: Wälzkörper
- 20: Schieber
- 22: Fortsatz
- 24: Seitenflanke
- 26: Anlagefläche
- 28: Entformungsrichtung
- 30: Teilfläche
- 30a: erste Teilfläche
- 30b: zweite Teilfläche
- 32: Ansatz
- R: Innenradius
- B: Aufnahmeraum für Schmiermittel

## Patentansprüche

1. Wälzlagerkäfig (10) für ein Wälzlager, mit
mindestens einem in Umfangsrichtung geschlossen verlaufenden Käfigring (12) und mehreren von dem Käfigring (12) in axialer Richtung abstehenden Käfigstegen (14), wobei der mindestens eine Käfigring (12) und jeweils zwei Käfigstege (14) eine Aufnahmetasche (16) zur Aufnahme jeweils eines Wälzkörpers (18) begrenzen, **dadurch gekennzeichnet, dass**
in Umfangsrichtung nachfolgende Käfigstege (14) eine unterschiedliche Querschnittsgeometrie zur Ausbildung von mindestens zwei in Umfangsrichtung nachfolgende Aufnahmetaschen (16) mit parallelen Entformungsrichtungen (28) für einen gemeinsamen Schieber (20) aufweisen, wobei die, eine Aufnahmetasche (16) begrenzenden Käfigstege (14) aufeinander zuweisende Seitenflanken (24) aufweisen, wobei jedes Paar von in tangentialer Richtung aufeinander zu weisenden Seitenflanken (24) zumindest in einem Teilbereich in Entformungsrichtung (28) verlaufende, zueinander parallele Teilflächen (30a, 30b) aufweisen, wobei eine erste Teilfläche (30a) angrenzend an einen Innenradius (R) des Wälzlagerkäfigs (10) angeordnet ist, wobei mindestens eine zweite Teilfläche (30b) von dem Innenradius (R) des Wälzlagerkäfigs (10) beabstandet angeordnet ist, und wobei die erste Teilfläche (30a) lediglich an einer der aufeinander zuweisenden Seitenflanken (24) angeordnet ist, während die mindestens eine zweite Teilfläche (30b) zumindest an der anderen der aufeinander zuweisenden Seitenflanken (24) angeordnet ist.

2. Wälzlagerkäfig nach Anspruch 1 **dadurch gekennzeichnet, dass** die in tangentialer Richtung aufeinander zu weisenden Seitenflanken (24) von in Umfangsrichtung nachfolgenden Käfigstegen (14) zur Positionierung eines Mittelpunkts eines Wälzkörpers (18) in der jeweiligen Aufnahmetasche (16) auf einen gemeinsamen vordefinierten Wälzradius ausgeformt sind.

3. Wälzlagerkäfig nach Anspruch 1 oder 2 **dadurch gekennzeichnet, dass** die in tangentialer Richtung aufeinander zu weisenden Seitenflanken (24) von in Umfangsrichtung nachfolgenden Käfigstegen (14) jeweils eine Anlagefläche (26) zum Anliegen an dem Wälzkörper (18) aufweisen, wobei die Anlageflächen (26) verschiedener Käfigstege (14) der selben Aufnahmetasche (16) auf einem unterschiedlichen Radius positioniert sind.

4. Wälzlagerkäfig, nach einem der Ansprüche 1 bis 3 **dadurch gekennzeichnet, dass** mindestens ein Käfigsteg (14) in tangentialer Richtung voneinander weg weisende Seitenflanken (24) mit jeweils zumindest in einem Teilbereich in Entformungsrichtung (28) verlaufende zueinander parallele Flächen (30, 30a) aufweist.

5. Wälzlagerkäfig nach einem der Ansprüche 1 bis 4 **dadurch gekennzeichnet, dass** mindestens ein Käfigsteg (14) radial außen einen in tangentialer Richtung und/oder in Umfangsrichtung abstehenden Ansatz (32), insbesondere zum teilweisen radialen Abdecken eines Wälzkörpers (18), aufweist.

6. Wälzlagerkäfig nach Anspruch 5 **dadurch gekennzeichnet, dass** eine von dem Ansatz (32) begrenzte, in tangentialen Richtung hinterschnittene Vertiefung in einer zur Radialrichtung dieses Käfigstegs (14) angeschrägten Entformungsrichtung (28) im Wesentlichen vollständig frei zugänglich ist.

7. Verfahren zur Herstellung eines Wälzlagerkäfigs (10) nach einem der Ansprüche 1 bis 6, insbesondere durch Kunststoffspritzguss, bei dem
mindestens ein, mindestens zwei Fortsätze (22) aufweisender Schieber (20) in einer Gießform bereitgestellt wird,
ein Kunststoffmaterial in die Gießform eingefüllt wird, wobei zumindest ein Teil der Fortsätze (22) des Schiebers (20) zur Ausbildung von Käfigstegen (14) von dem Kunststoffmaterial umgeben wird, und
der Schieber (20) nach radial außen relativ zur Gießform verschoben wird, um mindestens zwei Aufnahmetaschen (16) in dem Wälzlagerkäfig (10) gleichzeitig zu entformen.

8. Verfahren nach Anspruch 7, bei dem der Schieber (20) zwischen zwei benachbarten Fortsätzen (22) eine Negativform eines Käfigstegs (14) ausbildet.

9. Verwendung eines mindestens zwei Fortsätze (22) aufweisenden Schiebers (20) zur Ausbildung und Entformung von mindestens zwei Aufnahmetaschen (16) in einem Wälzlagerkäfig (10) nach einem der Ansprüche 1 bis 6 während eines Urformverfahrens, insbesondere im Kunststoffspritzguss.

## Claims

1. An anti-friction bearing cage (10) for an anti-friction bearing, having
at least one cage ring (12) extending in a closed manner in the circumferential direction, and a plurality of cage webs (14) projecting in the axial direction from the cage ring (12), wherein the at least one cage ring (12) and two cage webs (14) each delimit a receiving pocket (16) for receiving of a rolling element (18), **characterised in that** cage webs (14) following in the circumferential direction have a different cross-sectional geometry for forming at least two receiving pockets (16) following in the circumferential direction with parallel demoulding directions (28) for a common slide (20), wherein the cage webs (14) delimiting a receiving pocket (16) have mutually facing side flanks (24), wherein each pair of side flanks (24) facing each other in the tangential direction have at least mutually parallel partial surfaces (30a, 30b) extending in a partial region in the demoulding direction (28), wherein a first partial surface (30a) is arranged adjacent to an inner radius (R) of the anti-friction bearing cage (10), wherein at least one second partial surface (30b) is arranged at a distance from the inner radius (R) of the anti-friction bearing cage (10), and wherein the first partial surface (30a) is only arranged on one of the mutually facing side flanks (24), while the at least one second partial surface (30b) is arranged at least on the other of the mutually facing side flanks (24).

2. The anti-friction bearing cage according to Claim 1, **characterised in that** the side flanks (24) facing each other in the tangential direction are formed of cage webs (14) following in the circumferential direction for positioning a centre point of an anti-friction element (18) in the respective receiving pocket (16) on a common, predefined anti-friction radius.

3. The anti-friction bearing cage according to Claim 1 or 2, **characterised in that** the side flanks (24), facing each other in the tangential direction, of the cage webs (14) following in the circumferential direction each have a contact surface (26) for abutting the anti-friction element (18), wherein the contact surfaces (26) of different cage webs (14) of the same receiving pocket (16) are positioned on a different radius.

4. The anti-friction bearing cage according to one of Claims 1 to 3, **characterised in that** at least one cage web (14) has side flanks (24) facing away from one another in the tangential direction and each having mutually parallel surfaces (30, 30a) extending at least in a partial area in the demoulding direction (28).

5. The anti-friction bearing cage according to one of Claims 1 to 4, **characterised in that** at least one cage web (14) has, in the radially outward region, a shoulder (32) protruding in the tangential direction and/or in the circumferential direction, in particular for partially radially covering an anti-friction element (18).

6. The anti-friction bearing cage according to Claim 5, **characterised in that** a recess delimited by the shoulder (32) and undercut in the tangential direction is essentially completely freely accessible in a demoulding direction (28) inclined to the radial direction of this cage web (14).

7. A method for producing an anti-friction bearing cage (10) according to one of Claims 1 to 6, in particular by means of plastic injection moulding, in which
at least one slide (20) having at least two extensions (22) is provided in a casting mould,
a plastic material is filled into the casting mould, wherein at least a part of the extensions (22) of the slide (20) is surrounded by the plastic material to form cage webs (14), and
the slide (20) is displaced radially outward relative to the casting mould in order to simultaneously demould at least two receiving pockets (16) in the anti-friction bearing cage (10).

8. The method according to Claim 7, in which the slide (20) forms a negative shape of a cage web (14) between two adjacent extensions (22).

9. A use of a slide (20) having at least two extensions (22) for forming and demoulding at least two receiving pockets (16) in an anti-friction bearing cage (10) according to one of Claims 1 to 6 during an original moulding process, in particular in plastic injection moulding.

## Revendications

1. Cage de palier à roulement (10) pour un palier à roulement, comprenant
au moins une bague de cage (12) s'étendant fermée dans la direction circonférentielle et plusieurs nervures de cage (14) faisant saillie axialement depuis la bague de cage (12), dans laquelle l'au moins une bague de cage (12) et respectivement deux nervures de cage (14) délimitent une poche de réception (16) destinée à la réception d'un corps de roulement (18), **caractérisée en ce que** les nervures de cage (14)se suivant dans la direction circonférentielle, présentent une géométrie de section transversale différente pour former au moins deux poches de réception (16) se suivant dans la direction circonférentielle et présentant des directions de déformation parallèles (28) pour un coulisseau (20) commun, dans laquelle lesdites nervures de cage (14) délimitant une poche de réception (16) comportent des flancs latéraux (24) orientés les uns vers les autres, dans laquelle chaque paire de flancs latéraux (24) orientés les uns vers les autres dans la direction tangentielle comportent des surfaces partielles (30a, 30b) parallèles les unes aux autres, s'étendant au moins dans une zone partielle dans la direction de déformation (28), dans laquelle une première surface partielle (30a) est disposée adjacente à un rayon intérieur (R) de la cage de palier à roulement (10), dans laquelle au moins une seconde surface partielle (30b) est disposée à distance du rayon intérieur (R) de la cage de palier à roulement (10) et dans laquelle la première surface partielle (30a) est disposée uniquement sur l'un des flancs latéraux (24) orientés les uns vers les autres, l'au moins une seconde surface partielle (30b) étant disposée sur au moins l'autre des flancs latéraux (24) orientés les uns vers les autres.

2. Cage de palier à roulement selon la revendication 1, **caractérisée en ce que** les flancs latéraux (24) orientés les uns vers les autres dans la direction tangentielle des nervures de cage (14) se suivant dans la direction circonférentielle sont formés pour positionner un point central d'un corps de roulement (18) dans la poche de réception (16) respective sur un rayon de roulement commun prédéfini.

3. Cage de palier à roulement selon la revendication 1 ou 2, **caractérisée en ce que** les flancs latéraux (24) orientés les uns vers les autres dans la direction tangentielle des nervures de cage (14) se suivant dans la direction circonférentielle, comportent respectivement une surface d'appui (26) pour venir en appui avec le corps de rouleau (18), dans laquelle les surfaces d'appui (26) des différentes nervures de cage (14) de la même poche de réception (16) sont positionnées sur un rayon différent.

4. Cage de palier à roulement selon l'une quelconque des revendications 1 à 3, **caractérisée en ce qu'**au moins une nervure de cage (14) comporte des flancs latéraux (24) opposés les uns des autres dans la direction tangentielle comportant respectivement des surfaces (30, 30a) parallèles les unes aux autres s'étendant au moins dans une zone partielle dans la direction de déformation (28).

5. Cage de palier à roulement selon l'une quelconque des revendications 1 à 4, **caractérisée en ce qu'**au moins une nervure de cage (14) comporte un épaulement (32) faisant saillie radialement vers l'extérieur dans la direction tangentielle et/ou dans la direction circonférentielle, en particulier pour recouvrir radialement et partiellement un corps de roulement (18).

6. Cage de palier à roulement selon la revendication 5, **caractérisée en ce qu'**un évidement délimité par l'épaulement (32) et en contre-dépouille dans la direction tangentielle est sensiblement entièrement librement accessible dans une direction de déformation (28) inclinée par rapport à la direction radiale de ladite nervure de cage (14).

7. Procédé de fabrication d'une cage de palier à roulement (10) selon l'une quelconque des revendications 1 à 6, en particulier par moulage par injection sous pression de matière plastique, selon lequel
au moins un coulisseau (20) comportant au moins deux extensions (22) est fourni dans un moule de coulée,
une matière plastique est introduite dans le moule de coulée, dans lequel au moins une partie des extensions (22) du coulisseau (20) sont entourées par la matière plastique pour former des nervures de cage (14) et
le coulisseau (20) est déplacé radialement vers l'extérieur par rapport au moule de coulée pour déformer simultanément au moins deux poches de réception (16) dans la cage de palier à roulement (10).

8. Procédé selon la revendication 7, selon lequel le coulisseau (20) forme entre deux extensions (22) adjacentes une forme négative d'une nervure de cage (14).

9. Utilisation d'un coulisseau (20) comportant au moins deux extensions (22) destinées à la formation et à la déformation d'au moins deux poches de réception (16) dans une cage de palier à roulement (10) selon l'une quelconque des revendications 1 à 6 au cours d'un processus de formage initial, en particulier de moulage par injection sous pression de matière plastique.
